# EUROPÄISCHE PATENTSCHRIFT

(11) **EP 3 947 547 B1**
(45) Veröffentlichungstag und Bekanntmachung des Hinweises auf die Patenterteilung: **19.04.2023**
(21) Anmeldenummer: 20734548.9
(22) Anmeldetag: 26.06.2020
(51) Int. Cl.: C08L 21/00, C08L 23/22, B29D 30/06

(54) **KAUTSCHUKZUSAMMENSETZUNGEN MIT POLYORGANOSILOXANEN ALS WEICHMACHER**
RUBBER COMPOSITIONS CONTAINING POLYORGANOSILOXANES AS PLASTICIZERS
COMPOSITIONS DE CAOUTCHOUC COMPORTANT DES POLYORGANOSILOXANES EN TANT QUE PLASTIFIANTS

(30) Priorität: 27.06.2019 EP 19182809
(43) Veröffentlichungstag der Anmeldung: 09.02.2022
(73) Patentinhaber: Schill + Seilacher "Struktol" GmbH, 22113 Hamburg (DE)
(72) Erfinder: BÖRGER, Volker, 22085 Hamburg (DE); BECKER, Dörte, 21035 Hamburg (DE); KLOSE, Theresia, 01187 Dresden (DE); DITTRICH, Uwe, 01445 Radebeul (DE)
(74) Vertreter: Uexküll & Stolberg
(86) Internationale Anmeldenummer: PCT/EP2020/068023
(87) Internationale Veröffentlichungsnummer: WO 2020/260580

(56) Entgegenhaltungen:
- EP-A1- 2 151 479
- EP-A1- 2 354 145
- WO-A1-2011/083049
- CN-A- 109 369 979
- JP-A- 2017 008 202
- US-A- 4 710 541
- US-A1- 2011 262 573

## Beschreibung

### Gebiet der Erfindung

Die vorliegende Erfindung betrifft mit Polyorganosiloxanen als Weichmacher ausgerüstete Kautschukzusammensetzungen.

Insbesondere betrifft die vorliegende Erfindung die Verwendung von mit (Meth)acrylat modifizierten Polyorganosiloxanen als Weichmacher in Kautschukzusammensetzungen, die als Heizbälge bei der Reifenherstellung verwendet werden.

Die vorliegende Erfindung betrifft ferner Kautschukzusammensetzungen, die insbesondere für die Herstellung von und Verwendung in Heizbälgen zur Produktion von Reifen geeignet sind.

### Hintergrund der Erfindung

Kautschukzusammensetzungen, die mittels einer Harzvernetzung vulkanisiert werden, sind bekannt und finden vielfältige Anwendungen in diversen Industriezweigen. Gummiartikel auf dieser Basis werden beispielsweise für die Herstellung von Heizbälgen verwendet, die in der Produktion von Reifen aller Art eingesetzt werden.

In der Reifenproduktion selbst wird der unvernetzte ReifenRohling vulkanisiert. Der Vorgang der Vulkanisation beschreibt die Vernetzung von Kautschukzusammensetzungen unter Druck und erhöhter Temperatur. Dabei werden kovalente Bindungen zwischen den Polymeren geknüpft und ein Elastomernetzwerk aufgebaut.

Die Vulkanisation von Kautschukmischungen kann über unterschiedliche Mechanismen ablaufen. Die am häufigsten angewandte Vulkanisationsart ist die Schwefelvulkanisation. Kautschukmischungen können darüber hinaus auch mit Peroxiden, Aminen oder Harzen vernetzt bzw. vulkanisiert werden.

Zur Produktion eines Fahrzeugreifens wird der Reifenrohling für die Ausformung in eine Reifenpresse eingelegt und vulkanisiert. Heizbälge haben die Aufgabe, den Reifenrohling während der Vulkanisation unter Druck und bei hohen Temperaturen gegen die Innenwand der Reifenpresse zu drücken, um dem Reifen so sein Profil zu geben. Zu diesem Zweck nimmt der Heizbalg ein Druckmittel wie beispielsweise heißes Wasser oder Dampf auf.

Die erforderlichen Heizbälge können aus Kautschukzusammensetzungen hergestellt werden. Kautschukzusammensetzungen für Heizbälge bestehen in der Regel aus einem Polymersystem, einem Füllstoff, Zinkoxid, einem Weichmacheröl und einem Vernetzer-Harz. Darüber hinaus sind übliche weitere Verarbeitungsadditive Bestandteile der Kautschukzusammensetzung.

Das Polymer ist häufig Butylkautschuk, gegebenenfalls mit einem Zusatz an Chloroprenkautschuk, wenn das Vernetzerharz nicht halogeniert ist. Als Füllstoff wird vielfach Ruß verwendet. Zinkoxid fungiert als Katalysator für die Harzvernetzung bzw. dient der Verbesserung der thermischen Leitfähigkeit. Als Weichmacheröl wird in bekannten Heizbälgen, wie nachfolgend genauer beschrieben, Rizinusöl verwendet. Optional halogeniertes Formaldehyd-Alkylphenolharz mit Methylolgruppen wird in der Regel als Vernetzer-Harz eingesetzt. Ferner können den entsprechenden Zusammensetzungen weitere Zuschlagstoffe beigegeben werden, wie beispielsweise Homogenisatoren. Es sind auch Heizbälge beschrieben, die sowohl Butylkautschuk als auch Kautschuk mit von α-Methylstyrol abgeleiteten Einheiten als Polymersystem enthalten.

Ein Heizbalg durchläuft während der Vulkanisation des Reifens einen Zyklus, der aus einem Befüllvorgang, dem Aufblasen mit Druckmittel, und anschließender Entlastung, dem Ablassen des Druckmittels, besteht. Dadurch wird der Heizbalg mechanisch belastet. Neben dieser mechanischen Belastung ändern sich aber auch die entsprechenden physikalischen Bedingungen während des Durchlaufs durch den Zyklus in erheblichem Maße. Hierbei sind insbesondere die signifikanten Druck- und Temperaturänderungen relevant.

Dieser besonderen Form der Beanspruchung muss das in dem Heizbalg verwendete Material Rechnung tragen, insbesondere vor dem Hintergrund, eine möglichst große Anzahl von Reifen mit einem Heizbalg produzieren zu können. In Abhängigkeit von diversen Faktoren wie Reifengröße oder Vulkanisationsbedingungen durchläuft der Heizbalg eine unterschiedlich hohe Anzahl von Zyklen.

Ungeachtet dessen treten jedoch bei jedem Heizbalg nach einem gewissen Grad der Beanspruchung Ermüdungserscheinungen auf und es erfolgt letztendlich ein Ausfall durch beispielsweise Rissbildung, so dass der Heizbalg ausgetauscht werden muss.

Dies führt zu einer unerwünschten Unterbrechung des kontinuierlichen Reifen-Produktionsprozesses. Ferner entstehen durch den Austausch Mehrkosten. Demnach besteht ein ständiges Interesse daran, Heizbälge mit einer möglichst langen Lebensdauer bereitzustellen. Denn mit der Verlängerung der Lebensdauer geht nicht nur eine erhebliche Effizienzsteigerung und Kostenersparnis für die entsprechenden Reifenproduzenten einher, sondern vielmehr wird hierdurch auch ein signifikanter Beitrag dazu geleistet eine allgemein umweltfreundlichere Reifenproduktion zu gewährleisten.

Um den erheblichen Belastungen während der vorgesehenen Verwendung entgegenzuwirken, ist das Vorhandensein einer Weichmacherkomponente in Kautschuk-basierten Heizbälgen unerlässlich.

In diesem Zusammenhang wird bereits seit den 1950er Jahren insbesondere Rizinusöl als Weichmacher-Komponente in Kautschuk-basierten Heizbälgen verwendet, wie beispielsweise in der DE 1 283 521 beschrieben.

Rizinusöl wird dabei als besonders geeigneter Weichmacher erachtet und hat sich in den vergangenen Jahrzehnten bewährt, da es auch bei hohen Temperaturen eine relativ niedrige Flüchtigkeit aufweist und generell geeignet ist, die Tendenz von harzvernetzten Mischungen zu verringern, einen sogenannten Marching Modulus während der Vernetzung zu zeigen. In diesem Zusammenhang wird für Rizinusöl-haltige Kautschukzusammensetzungen in der WO 2013/052206 A1 ein niedriger Modul und eine gute Beständigkeit gegen Dampfalterung beschrieben, wobei hier neben Rizinusöl durch Zugabe von Kohlenwasserstoffharzen (Hydrocarbon Polymer Modifiers (HPM)) versucht wird, die Beständigkeit der herzustellenden Heizbälge weiter zu erhöhen.

Trotz der Vorteile, die die Verwendung von Rizinusöl in den infrage stehenden Kautschukzusammensetzungen mit sich bringt, fallen die aus den entsprechenden Zusammensetzungen hergestellten Heizbälge nach einer bestimmten Anzahl von Vulkanisations-Zyklen aus. Bisher ist es auch durch die Zugabe von Rizinusöl nicht gelungen, die gewünschte hohe Lebensdauer der Heizbälge zu erreichen.

Die EP 2 354 154 A1 und EP 2 151 479 A1 betreffen Kautschukzusammensetzungen, die peroxidisch vulkanisiert werden und Polyorganosiloxane erhalten, die die Viskosität des Kautschuks bei der Verarbeitung verbessern sollen, ohne dass sich relevante mechanische Eigenschaften des erhaltenen Vulkanisats verschlechtern (beispielsweise der Modul sinkt). Diese Polyorganosiloxane weisen mindestens einen organischen Anteil R auf, der mindestens eine Kohlenstoff-Kohlenstoff-Mehrfachbindung aufweist und ggf. einen weiteren Kohlenwasserstoffanteil R2 mit einer Kettenlänge von 5 bis 50 Kohlenstoffatomen. Es sei darauf hingewiesen, dass sich aus der Wirkung eines Additivs bei der Verarbeitung von Kautschuk, wie z. B. eine Senkung der Viskosität, keine Rückschlüsse auf das fertige Vulkanisat ziehen lassen, z. B. in Bezug auf bestimmte angestrebte physikalische Eigenschaften, wie sie Weichmachern zugeordnet werden, wie beispielsweise Formveränderungsvermögen, elastische Eigenschaften oder verringerte Härte.

US 2011/0262573 A1 beschreibt ein Herstellungsverfahren für einen Heizbalg (engl.: "Bladder") für die Reifenherstellung, bei der die Oberfläche des Bladder durch Aufbringen einer Schicht modifiziert wird, die die Funktion eines Trennmittels übernimmt, und dabei aber fest auf der Oberfläche des Bladder fixiert ist, die der Reifeninnenseite zugewandt ist. Als Weichmacher für die aus US 2011/0262573 A1 bekannten Bladder-Kautschukzusammensetzungen wird Rizinusöl eingesetzt.

Ein in US 2011/0262573 A1 zur Oberflächenbeschichtung auf Trennmittelersatz verwendetes Polyorganosiloxan weist ein hohes Molekulargewicht von bis zu 12.000 auf (durchschnittliches Molekulargewicht, Zahlenmittel).

US 4,710,541 beschreibt ein Verfahren zum Formen und Vulkanisieren von Kautschukprodukten wie Reifen, bei dem ein verbesserter Heizbalg (Bladder) verwendet wird. Der in US 4,710,541 beschriebene Bladder ist modifiziert, um seine Trenneigenschaften vom Reifenmaterial zu verbessern, z. B. über eine geeignete Oberflächenmodifizierung. Die in US 4,710,541 beschriebene Erfindung strebt somit nach einem Ersatz für herkömmliche Trennmittel. Das in US 4,710,541 beschriebene Polyorganosiloxan ist insbesondere ein hochmolekulares Polyorganosiloxan mit einem Polymerisationsgrad von > 1.000, wie beispielsweise 7.000 Dimethylsiloxyeinheiten. Es wird in großen Mengenanteilen von beispielsweise 30 Gew.-Teilen auf 70 Gew.-Teile Kautschuk eingesetzt.

Trotz diverser Verbesserungen auf dem Gebiet der Kautschukzusammensetzungen besteht somit ein erheblicher Bedarf an neuen verbesserten Kautschukzusammensetzungen, die nicht nur geeignet sind, selbst zu einem zur Reifenproduktion verwendbaren Heizbalg vulkanisiert zu werden, sondern vielmehr Heizbälge bereit zu stellen, die, unter Berücksichtigung der im Rahmen des Vulkanisationszykluses zur Reifenproduktion auftretenden erheblichen Materialbeanspruchung, eine längere Lebensdauer aufweisen.

### Zusammenfassung der Erfindung

Gemäß einem ersten Aspekt betrifft die vorliegende Erfindung die Verwendung eines oder mehrerer modifizierter Polyorganosiloxane als Weichmacher in Kautschukzusammensetzungen, wobei der Kautschuk mittels eines oder mehrerer Vernetzerharze vulkanisiert wird, wobei das Polyorganosiloxan 3 oder mehr Siloxaneinheiten und einen oder mehrere organische Anteile R¹ enthält, der eine oder mehrere Kohlenstoff-Kohlenstoff-Mehrfachbindungen und mindestens 4 Kohlenstoffatome aufweist.

Gemäß einem weiteren Aspekt betrifft die vorliegende Erfindung ein Verfahren zur Herstellung eines Heizbalgs zur Reifenherstellung, bei dem eine Kautschukzusammensetzung, die ein oder mehrere modifizierte Polyorganosiloxane, ein oder mehrere Vernetzerharze zur Vernetzung und gegebenenfalls weitere übliche Additive enthält, mittels des Vernetzerharzes vulkanisiert wird, wobei das modifizierte Polyorganosiloxan und die Kautschukzusammensetzung wie hierin definiert sind.

Schließlich betrifft die vorliegende Erfindung einen Heizbalg zur Reifenherstellung, der mit Vernetzerharz vulkanisierbare Kautschukzusammensetzung umfasst, welche Kautschukzusammensetzung modifiziertes Polyorganosiloxan umfasst und mittels des Vernetzerharzes vulkanisiert worden ist, wobei das modifizierte Polyorganosiloxan und die Kautschukzusammensetzung wie hierin definiert sind.

Mit "modifiziert" ist die Anwesenheit eines organischen Anteils R¹ in dem erfindungsgemäßen Polyorganosiloxan gemeint.

Kann ein Merkmal der Erfindung in einer oder mehreren verschiedenen Ausführungsformen vorhanden sein, so beziehen sich im Folgenden ausführlich beschriebene Varianten auf alle (verschiedenen) Ausführungsformen, auch wenn nicht ausdrücklich Plural verwendet wird.

Bevorzugte Ausführungsformen der Erfindung können aus den im Folgenden offenbarten Merkmalen bestehen, ohne dass weitere Komponenten vorhanden sind.

### Kurze Beschreibung der Figuren

**Figur 1** zeigt die Ergebnisse des Dauerknickversuches nach De Mattia für die vulkanisierten Kautschukzusammensetzungen **1** bis **4.**
**Figur 2** zeigt die Ergebnisse des Dauerknickversuches nach De Mattia für die vulkanisierten Kautschukzusammensetzungen **1** bis **4** nach deren Dampfalterung (48h bei 190°C).

### Detaillierte Beschreibung der Erfindung

Die Erfinder haben überraschenderweise gefunden, dass die Verwendung bestimmter Polyorganosiloxane, die funktionelle Gruppen tragen ("modifizierte Polyorganosiloxane"), als Weichmacher in Kautschukzusammensetzung, die in Heizbälgen zur Reifenherstellung verwendet werden können, die erfindungsgemäße Aufgabe lösen. Insbesondere wenn das in den zugrunde liegenden Kautschukzusammensetzungen üblicherweise verwendete Rizinusöl teilweise oder vollständig durch die erfindungsgemäßen Polyorganosiloxane ersetzt wird, können Heizbeläge zur Reifenherstellung hergestellt werden, die im Vergleich zu den vorbekannten Heizbelägen eine längere Lebensdauer aufweisen.

Der erfindungsgemäße Weichmacher wirkt also im Volumen der Kautschukzusammensetzung, die ihn enthält. Ein nur auf der Oberfläche einer Kautschukzusammensetzung vorhandenes Material, z.B. eine darauf temporär oder dauerhaft angebundene Schicht, ist erfindungsgemäß nicht als Weichmacher geeignet.

### Polyorganosiloxane

Polyorganosiloxane an sich sind bekannte Substanzen. Es handelt sich um (Makro-)moleküle, die nach dem Schema (R₂SiO)ₓ aufgebaut sind, wobei R üblicherweise Kohlenwasserstoffreste sind (meist Methyl, seltener Ethyl, Propyl, Phenyl u.a.), siehe z.B. Römpp Chemie Lexikon 9. Auflage 1992 Band 5, S. 4168).

Die erfindungsgemäß verwendeten Polyorganosiloxane zeichnen sich dadurch aus, dass sie 3 oder mehr Siloxaneinheiten besitzen und einen oder mehrere organische Anteile R¹, insbesondere zwei oder mehrere organische Anteile R¹, und vorzugsweise einen oder mehrere Kohlenwasserstoffanteile R² aufweisen.

In einem erfindungsgemäßen Polyorganosiloxan vorhandene Anteile R¹ und R² können jeweils gleich oder unterschiedlich sein.

### Organischer Anteil R¹

Erfindungsgemäß eingesetzte Polyorganosiloxane weisen einen oder mehrere organische Anteile R¹ auf, wobei R¹ eine oder mehrere Kohlenstoff-Kohlenstoff-Mehrfachbindungen enthält und mindestens 4 Kohlenstoffatome aufweist.

Es ist bevorzugt, dass die Kohlenstoff-Kohlenstoff-Mehrfachbindung in R¹ eine Kohlenstoff-Kohlenstoff-Doppelbindung ist, beispielsweise in einer Kohlenstoffkette oder einem Ring von Kohlenstoffatomen. In einer bevorzugten Ausführungsform ist der organische Anteil R¹ ein einwertiger Rest.

Besonders bevorzugt sind in allen Ausführungsformen der Erfindung Polyorganosiloxane, deren R¹ mindestens fünf Kohlenstoffatome aufweisen, wie beispielsweise mindestens sechs, insbesondere mindestens sieben Kohlenstoffatome.

Es ist bevorzugt, dass das erfindungsgemäße Polyorganosiloxan mindestens zwei Kohlenstoff-Kohlenstoff-Mehrfachbindungen aufweist. Dies bedeutet, dass, wenn die Gruppe R¹ nur eine einzige Kohlenstoff-Kohlenstoff-Mehrfachbindung aufweist, dann mindestens zwei Gruppen R¹ vorhanden sein müssen. Diese Ausführungsform ist bevorzugt. Alternativ ist es möglich, dass eine Gruppe R¹ mindestens zwei Kohlenstoff-Kohlenstoff-Mehrfachbindungen besitzt. Diese Ausführungsform ist jedoch nicht bevorzugt, weil die Herstellung der entsprechenden Polyorganosiloxane aufwändiger ist.

Als R¹ kommen beispielsweise Cycloalkenyl, Alkenyl, Vinyl enthaltende, Allyl enthaltende, Norbornyl, (Di)cyclopentenyl oder von ungesättigten Acyloxygruppen wie von Methacrylat oder Acrylat abgeleitete Gruppen in Frage. Bevorzugte einwertige Reste R¹ sind abgeleitet von Cyclohexen und (Meth)acrylat, insbesondere (Meth)acrylat-abgeleitete Reste R¹, die über eine Kohlenwasserstoffkette, die mit ein oder mehreren Heteroatomen wie Sauerstoff oder Schwefel substituiert und/oder von ein oder mehreren Heteroatomen wie Sauerstoff und Schwefel unterbrochen sein kann, an das Grundgerüst des Polyorganosiloxans gebunden sind.

Gemäß einer bevorzugten Ausführungsform ist R¹ ein einwertiger ungesättigter Acyloxyrest (d.h. ein Rest vom Typ RCOO-) mit bis zu 15 C-Atomen (Gesamtzahl der C-Atome einschließlich etwaiger Substituenten), wobei der Acyloxyrest endständig (d.h. in der Einheit R) eine substituierte oder nicht-substituierte Doppelbindung trägt und über eine Kohlenwasserstoffkette, die bevorzugt mindestens ein Sauerstoffatom in der Kette enthält und bevorzugt mit mindestens einer Hydroxygruppe substituiert ist, an ein Siliciumatom des Grundgerüsts des Polyorganosiloxans gebunden ist. Die Substituenten an den C-Atomen der endständigen Doppelbindungen sind bevorzugt Methylgruppen, insbesondere eine Methylgruppe (wie bei einer von Methacrylat abgeleiteten Gruppe CH₂=C(CH₃)COO-) .

Besonders bevorzugte Beispiele für R¹ sind die folgenden Gruppen

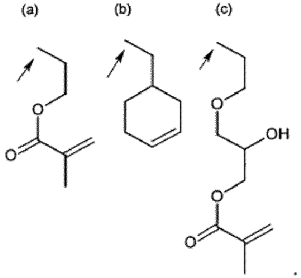

Dabei ist das Kohlenstoffatom, das an das Siliciumatom gebunden ist, jeweils mit einem Pfeil gekennzeichnet.

Diese Funktionalisierungen sind zugänglich durch Umsetzung einer SiH-Einheit mit einer Verbindung, die eine der Hydrosilylierung zugängliche Doppelbindung aufweist, wie beispielsweise:
(A) Allyl(meth)acrylat,
(B) 4-Vinylcyclohexen oder
(C) Allylglycidylether mit anschließender Öffnung des Epoxidrings durch Umsetzung mit (Meth)acrylsäure.

Besonders bevorzugt ist die Umsetzung (C), wodurch die obige Struktur (c) gebildet wird. Polyorganosiloxane dieses allgemeinen Typs sind beispielsweise aus der EP 0 269 114 A2 und der DE 30 44 237 A1 bekannt.

Die Zahl der Kohlenstoffatome zwischen dem Siliciumatom, das die Gruppe R¹ trägt, und der Kohlenstoff-Kohlenstoff-Mehrfachbindung beträgt vorzugsweise 1 bis 10, bevorzugter 2 bis 7, wie beispielsweise 4. Bei ringförmigen oder einen Ring enthaltenden Gruppen wird der kürzeste Weg zur Doppelbindung gezählt.

In einer bevorzugten Ausführungsform ist R¹ in dem erfindungsgemäßen Polyorganosiloxan als Teil der Struktureinheit I vorhanden

[R¹ₓRₐSiO_{[4-(x+a)]/2}] (I),

wobei x gleich 1, 2 oder 3 und vorzugsweise 1 ist, a gleich 0, 1 oder 2, vorzugsweise 1 oder 2 und insbesondere 2 ist und R ein linearer oder verzweigter Alkylrest, ein Cycloalkylrest oder aromatischer Rest mit bis zu 9 C-Atomen ist, insbesondere bis zu 6 C-Atomen. Vorzugsweise ist R ausgewählt aus Methyl, Ethyl, Propyl, Butyl, Pentyl oder Phenyl, wobei R besonders bevorzugt Methyl ist.

Bevorzugte Struktureinheiten I mit x = 1 sind eine difunktionelle Struktureinheit I^{D} mit a = 1:

[R¹RSiO_{2/2}] (I^{D}),

und eine monofunktionelle Struktureinheit I^{M} mit x = 1 und a = 2:

[R¹R₂SiO_{1/2}] (I'').

Erfindungsgemäß bevorzugte Polyorganosiloxane weisen von 15 bis 70, vorzugsweise 20 bis 40 oder 50 und insbesondere 20 bis 30 Struktureinheiten vom Typ I^{D} auf, was ein Maß für die Kettenlänge des Polyorganosiloxans ist.

### Kohlenwasserstoffanteil R²

Erfindungsgemäße Polyorganosiloxane weisen gegebenenfalls einen oder mehrere längere Alkylreste R² auf, wobei R² eine Kettenlänge von 5 bis 50 Kohlenstoffatomen besitzt.

R² ist gemäß einer Ausführungsform ausgewählt aus verzweigten oder unverzweigten Alkylgruppen mit 5 bis 30 C-Atomen, insbesondere unverzweigten Alkylgruppen mit 5 bis 30 C-Atomen, wie n-C₈- bis C₃₀-Alkyl, vorzugsweise n-C₁₀- bis C₂₆- Alkyl, bevorzugter n-C₁₂- bis C₁₈-Alkyl, wie beispielsweise n-C₁₈-Alkyl.

Vorzugsweise ist der Alkylrest R² in dem Polyorganosiloxan als Teil der Einheit II enthalten

[R²_{y}R'_{b}SiO_{[4-(y+b)]/2}] (II),

wobei y gleich 1, 2 oder 3 und vorzugsweise 1 ist, b gleich 0, 1 oder 2, vorzugsweise 1 oder 2 und insbesondere 1 ist, und R' ein einwertiger organischer Rest ist wie oben für R in Bezug auf Struktureinheit (I) definiert, aber unabhängig von R gewählt wird. Dabei ist bevorzugt, dass R' ausgewählt ist aus Methyl, Ethyl, Propyl, Butyl, Pentyl oder Phenyl, wobei R' besonders bevorzugt Methyl ist.

Bevorzugte Struktureinheiten II mit y = 1 sind eine difunktionelle Struktureinheit II^{D} mit b = 1:

[R²R'SiO_{2/2}] (II^{D}),

und eine monofunktionelle Struktureinheit II^{M} mit y = 1 und b = 2:

[R²R'₂SiO_{1/2}] (II^{M}).

### Struktur des Polyorganosiloxans

Neben den erwähnten und vorzugsweise vorhandenen Struktureinheiten I und II weisen erfindungsgemäße Polyorganosiloxane vorzugsweise auch die difunktionelle Struktureinheit III^{D} auf:

[R"₂SiO_{2/2}] (III^{D}),

wobei die Reste R" gleich oder verschieden sind (und vorzugsweise gleich sind) und ausgewählt sind aus linearen Alkylresten, verzweigten Alkylresten, Cycloalkylresten oder aromatischen Resten, die über ein Sauerstoffatom an das Polyorganosiloxan gebunden sein können, und die Reste R" vorzugsweise Methyl, Ethyl, Propyl und Phenyl sind, insbesondere Methyl.

In einer Ausführungsform ist (sind) in dem erfindungsgemäßen Polyorganosiloxan auch eine (oder zwei) monofunktionelle Struktureinheiten III^{M} vorhanden:

[R‴₃SiO_{1/2}] (III^{M}),

wobei die Reste R‴ gleich oder verschieden sind und ausgewählt sind aus Hydroxy- und linearen Alkylresten, verzweigten Alkylresten Cycloalkylresten oder aromatischen Resten, die über ein Sauerstoffatom gebunden sein können, und die Reste R‴ vorzugsweise Hydroxy, Methyl, Ethyl, Propyl und Phenyl sind, insbesondere Hydroxy und Methyl. In einer besonders bevorzugten Ausführungsform sind die Reste R‴ gleich und sind Methylgruppen.

Eine bevorzugte Struktur eines erfindungsgemäßen Polyorganosiloxans ist wie folgt:

[I^{D}]ₘ[I^{M}]ₙ[II^{D}]ₒ[II^{M}]ₚ[III^{D}]_{q}[III^{M}]₍₂₋ₙ₋ₚ₎,

wobei
(i) m und o unabhängig voneinander im Bereich von 0 bis 40 liegen und n und p unabhängig voneinander 0, 1 oder 2 sein können,
   - mit der Maßgabe, dass die Summe (m + n) mindestens 1 beträgt und bevorzugt die Summe (o + p) mindestens 1 beträgt,
   - mit der weiteren Maßgabe, dass die Summe (n + p) höchstens 2 ist,
   - wobei die Summe (m + n + o + p) vorzugsweise im Bereich bis 20 liegt, und
(ii) q im Bereich von 0 bis 100 liegt.

Dabei sind die difunktionellen Struktureinheiten I^{D}, II^{D} und III^{D} in dem erfindungsgemäßen Polyorganosiloxan typischerweise und vorzugsweise nicht als Block angeordnet, sondern entlang der Polysiloxankette statistisch verteilt. Für den Fachmann ist außerdem klar, dass die Parameter m, n, o, p und q Durchschnittswerte sind, weil die erfindungsgemäßen Polyorganosiloxane bei der Herstellung typischerweise nicht als einheitliche Verbindungen anfallen.

In einer bevorzugten Ausführungsform ist n gleich 1 oder 2 und vorzugsweise 2, d.h., die Funktionalisierung R¹ ist in dem Polyorganosiloxan (zumindest auch) in monofunktionellen (endständigen, terminalen) Struktureinheiten I^{M} enthalten.

In einer weiteren bevorzugten Ausführungsform ist n gleich 2 und m gleich Null (0), d.h., die Funktionalisierung R¹ ist in dem Polyorganosiloxan ausschließlich in monofunktionellen (endständigen, terminalen) Struktureinheiten I^{M} enthalten.

In einer weiteren bevorzugten Ausführungsform ist n gleich 1 oder 2, vorzugsweise 2, und m ungleich Null (0), d.h., die Funktionalisierung R¹ ist in dem Polyorganosiloxan sowohl in monofunktionellen (endständigen, terminalen) Struktureinheiten I^{M} enthalten sowie in den difunktionellen (brückenständigen) Struktureinheiten I^{D} enthalten, so wie wenn m = 1 oder 2 ist.

In allen Ausführungsformen der Erfindung ist bevorzugt, dass der Anteil R¹ an ein anderes Siliciumatom gebunden ist als der Anteil R².

In einer bevorzugten Ausführungsform beträgt die Gesamtzahl der Siloxaneinheiten der erfindungsgemäßen Polyorganosiloxane (m + o + q + 2) 10 bis 100, bevorzugter 15 bis 70, insbesondere 20 bis 50, wie 20 bis 30 oder 40.

In einer weiteren bevorzugten Ausführungsform beträgt die Summe der funktionalisierten Siloxaneinheiten in den erfindungsgemäßen Polyorganosiloxanen (m + n + o + p) 2 bis 15, bevorzugter 2 bis 6 oder 10.

Bevorzugte Verhältnisse der Funktionalisierungen mit R¹ und R² in difunktionellen Siloxaneinheiten I^{D} und II^{D} betragen (das heißt m/o beträgt) 10/90 bis 99/1, bevorzugter 30/70 bis 98/2, insbesondere 50/50 bis 97/3, wie 70/30 bis 96/4 oder 75/25 bis 95/5.

Die Zahl der unsubstituierten difunktionellen Siloxaneinheiten III^{D} (q) in den erfindungsgemäßen Polyorganosiloxanen beträgt vorzugsweise 5 bis 60, bevorzugter 10 bis 50, insbesondere 15 bis 40, wie 20 bis 30.

Erfindungsgemäße Polyorganosiloxane können als bei Raumtemperatur (25°C) flüssige Verbindungen mit einer hohen Viskosität vorliegen. In Abhängigkeit von u.a. der Länge der Siloxankette (d.h. Summe der SiO-Einheiten, Summe (m + o + q + 2), ab etwa 30), eventuell der Länge des Kohlenwasserstoffanteils R² (ab etwa 20 Kohlenstoffatome) und der möglichen Zahl der Kohlenwasserstoffanteile R² können die erfindungsgemäßen Polyorganosiloxane bei Raumtemperatur fest sein.

Es ist möglich, das erfindungsgemäße Polyorganosiloxan als Masterbatch einzusetzen, der
a) einen oder mehrere Kautschuke und
b) ein oder mehrere erfindungsgemäße Polyorganosiloxane enthält.

Bevorzugt enthält der Masterbatch 0,5 bis 30 Gewichtsteile erfindungsgemäßes Polyorganosiloxan, bevorzugter 0,5 bis 20 Gewichtsteile und insbesondere 0,5 bis 10 Gewichtsteile Polyorganosiloxan, bezogen auf 100 Gewichtsteile Kautschuk (phr, parts per hundred parts rubber). Typischerweise werden in dem Masterbatch als Kautschuke mittels Vernetzerharz vernetzbare Kautschuke verwendet, wie beispielsweise Butylkautschuk und Chloroprenkautschuk.

Der Einsatz eines Masterbatch erleichtert die Einarbeitung des erfindungsgemäßen Polyorganosiloxans in einen Kautschuk.

Darüber hinaus ist es möglich, das erfindungsgemäße Polyorganosiloxan in Form einer Abmischung einzusetzen, die
a) ein oder mehrere feste Trägermaterialien (vorzugsweise ausgewählt aus anorganischen Füllstoffen (wie beispielsweise Kieselsäure) oder wachsartigen Materialien (wie beispielsweise Polyethylenwachse)) und
b) ein oder mehrere erfindungsgemäße Polyorganosiloxane enthält.

Das Gewichtsverhältnis von a) Trägermaterial zu b) erfindungsgemäßem Polyorganosiloxan in der Abmischung beträgt vorzugsweise 10/90 bis 90/10, bevorzugter 20/80 bis 80/20 und besonders bevorzugt etwa 60/40. Bevorzugte Materialien für Abmischungen sind Kieselsäuren oder andere anorganische Füllstoffe wie beispielsweise Kreide oder wachsartige Materialien wie beispielsweiser Polyethylenwachse.

Der Einsatz einer Abmischung erleichtert insbesondere die Handhabung der erfindungsgemäßen Polyorganosiloxane, wenn diese bei Raumtemperatur flüssig sind.

Verfahren zur Herstellung erfindungsgemäßer Polyorganosiloxane

Bei einem bevorzugten Verfahren zur Herstellung der erfindungsgemäßen Polyorganosiloxane wird
a) ein Polyorganosiloxan, das zwei oder mehr SiH-Gruppen aufweist, mit einer Verbindung umgesetzt, die mindestens eine Gruppe R¹ aufweist, um ein Polyorganosiloxan mit mindestens einer Gruppe R¹ und optional einer oder mehreren verbliebenen SiH-Gruppen zu erhalten, und
b) optional das in Schritt a) erhaltene Polyorganosiloxan mit mindestens einer oder mehreren verbliebenen SiH-Gruppen mit einem α-Olefin umgesetzt, um ein erfindungsgemäßes Polyorganosiloxan zu erhalten.

Bei einem besonders bevorzugten Verfahren zur Herstellung der erfindungsgemäßen Polyorganosiloxane wird
a) ein Polyorganosiloxan, das zwei oder mehr SiH-Gruppen aufweist, mit einer Verbindung umgesetzt, die mindestens eine hydrosilylierbare Gruppe und eine weitere davon verschiedene funktionelle Gruppe R³ aufweist, die unter gängigen Hydrosilylierungsbedingungen inert ist, wie ein Epoxid, insbesondere ein Glycidether, um ein Polyorganosiloxan mit mindestens einer Gruppe R³zu erhalten, und
b) das in Schritt a) erhaltene Polyorganosiloxan mit einer Verbindung umgesetzt, die mindestens eine Gruppe R¹ und eine weitere davon verschiedene funktionelle Gruppe R⁴ aufweist, die geeignet ist selektiv mit der Gruppe R³ eine Bindung zu bilden, um ein Polyorganosiloxan mit mindestens einer Gruppe R¹ und optional einer oder mehreren verbliebenen nicht-umgesetzten R³-Gruppen zu erhalten, und
c) optional das in Schritt b) erhaltene Polyorganosiloxan mit einer Verbindung umgesetzt, die mindestens eine Gruppe R² und eine weitere davon verschiedene funktionelle Gruppe R⁴ aufweist, die geeignet ist selektiv mit der Gruppe R³ eine Bindung zu bilden, um ein erfindungsgemäßes Polyorganosiloxan zu erhalten.

Bei einem alternativen Verfahren zur Herstellung der erfindungsgemäßen Polyorganosiloxane wird
a) ein Silan, das eine oder mehrere hydrolysierbare Gruppen besitzt, mit einer Gruppe R¹ funktionalisiert,
b) optional ein Silan, das eine oder mehrere hydrolysierbare Gruppen besitzt, mit einer Gruppe R² funktionalisiert,
c) die in Schritt a) erhaltende Verbindung mit der optionalen in Schritt b) erhaltenen Verbindung zusammen mit einer das Siloxan-Grundgerüst liefernden Verbindung, wie Octamethylcyclotetrasiloxan, unter basischen Bedingungen in Wasser umgesetzt.

### Verwendung und Vulkanisationsverfahren

Die Polyorganosiloxane werden erfindungsgemäß als Weichmacher in Kautschukzusammensetzungen eingesetzt. Mit anderen Worten, die erfindungsgemäßen Polyorganosiloxane wirken im Volumen der Kautschukzusammensetzung, in das sie eingearbeitet werden, im Gegensatz zu einer reinen Modifikation der Oberfläche der Kautschukzusammensetzung (wenn sie als Formteil mit einer definierten Oberfläche vorliegt). Gemäß einer Ausführungsform der vorliegenden Erfindung ist die Kautschukzusammensetzung nicht an der Oberfläche mit einer Beschichtung modifiziert.

Bevorzugt enthält die Kautschukzusammensetzung 0,5 bis 30 Gewichtsteile erfindungsgemäßes Polyorganosiloxan, bevorzugter 0,5 bis 20 Gewichtsteile, besonders bevorzugt 1 bis 15 Gewichtsteile, und insbesondere 2 bis 8 Gewichtsteile Polyorganosiloxan, bezogen auf 100 Gewichtsteile Kautschuk (phr, parts per hundred parts rubber). Bevorzugt enthält die Kautschukzusammensetzung 1 bis 10 phr erfindungsgemäßes Polyorganosiloxan. Bevorzugt enthält die Kautschukzusammensetzung 2 bis 7 phr erfindungsgemäßes Polyorganosiloxan. Bevorzugt enthält die Kautschukzusammensetzung 2,5 bis 6,5 phr erfindungsgemäßes Polyorganosiloxan. Bevorzugt enthält die Kautschukzusammensetzung 6 phr erfindungsgemäßes Polyorganosiloxan.

In einer bevorzugten Ausführungsform ist der Kautschuk ein mittels Vernetzerharz vernetzbarer Kautschuk. Insbesondere sind solche mit Vernetzerharz vernetzbaren Kautschuke nicht mit peroxidischen Vernetzern vulkanisierbar, da sich diese Kautschuke unter den entsprechenden Reaktionsbedingungen zersetzen. Erfindungsgemäß werden Kautschuke verwendet, die insbesondere zur Herstellung von Heizbälgen geeignet sind, die in der Produktion von Reifen eingesetzt werden können.

Bevorzugte Kautschuke, die im Rahmen der erfindungsgemäßen Verwendung eingesetzt werden können, sind beispielsweise Butylkautschuk, bromierte Copolymere von Isobutylen und p-Methylstyrol und Mischungen davon.

Als geeignete Vernetzerharze für die erfindungsgemäße Verwendung kommen insbesondere solche in Betracht, die in der Vulkanisation von Kautschukzusammensetzungen im Rahmen der Herstellung von Heizbälgen für die Reifenproduktion Anwendung finden. Vorzugsweise finden solche Vernetzerharze Anwendung, die dreidimensionale Netzwerkstrukturen ausbilden können. Insbesondere Phenol-Formaldehyd-Harze sind vorliegend geeignet. Die Vernetzungsfähigkeit dieser Verbindungsgruppe basiert auf der Reaktivität der Phenolmethylol-Gruppen in den Phenol-FormaldehydHarzen, die unter Wärmeeinwirkung und Abspaltung von Wasser eine exo-Methylengruppe-haltige α,β-ungesättigte Carbonylverbindung bilden, die wiederum mit einer Isopren-basierten Kautschukeinheit unter Bildung eines Chromanringsystems reagiert. Die eingesetzten Phenol-Formaldehyd-Harze enthalten zum Zwecke der Vernetzung mindestens zwei Phenolmethylol-Gruppen. Erfindungsgemäß können insbesondere Alkylphenol-Formaldehyd-Harze zur Vernetzung verwendet werden, wobei Alkyl vorzugsweise C₄ bis C₁₀-Alkyl ist wie insbesondere Octyl. Das Vernetzerharz kann gegebenenfalls halogeniert sein, z.B. bromiert, wie das von Akrochem erhältliche bromierte Octylphenyl-FormaldehydHarz SP-1055. Wird ein nicht halogeniertes Vernetzerharz verwendet, wie das von Akrochem erhältliche Octylphenyl-Formaldehyd-Harz SP-1045, wird eine geeignete halogenhaltige Komponente zugesetzt, wie Chloroprenkautschuk. Ebenfalls verwendet werden können azidische Substanzen (Lewissäuren wie z.B. SnCl₂ oder FeCl₃).

Bevorzugt enthält die Kautschukzusammensetzung 0,5 bis 30 Gewichtsteile Vernetzerharz, bevorzugter 1 bis 20 Gewichtsteile, besonders bevorzugt 2 bis 15 Gewichtsteile, und insbesondere 2 bis 12 Gewichtsteile Vernetzerharz, bezogen auf 100 Gewichtsteile Kautschuk (phr, parts per hundred parts rubber).

Eine Kautschukzusammensetzung enthält vorzugsweise ferner Zuschlagstoffe wie Füllstoffe (beispielsweise Ruß, Kieselsäure, Zinkoxid, Calciumcarbonat, Bariumsulfat, Magnesiumoxide, Aluminiumoxide, Eisenoxide, Silikate) und für die Vernetzung benötigte Substanzen (Zinkoxid, Beschleuniger, Magnesiumoxid, Schwefel), Katalysatoren/Aktivatoren für die Harzvernetzung (beispielsweise Chloroprenkautschuk, Zinkoxid, Stearinsäure bzw. daraus gebildete Salze), Alterungsschutzmittel, Homogenisatoren in üblichen Mengen.

Die Erfindung betrifft darüber hinaus ein Verfahren zur Herstellung eines Heizbalgs zur Reifenherstellung, bei dem eine Kautschukzusammensetzung, die ein oder mehrere erfindungsgemäße modifizierte Polyorganosiloxane, ein oder mehrere Vernetzerharze zur Vernetzung und gegebenenfalls weitere übliche Additive enthält, mittels des Vernetzerharzes vulkanisiert wird. Die Komponenten werden dabei, wie in den nachstehenden Beispielen ausführlich offenbart, mittels geeigneter Vorrichtungen und Bedingungen ausreichend innig vermischt. Mischprozesse und dazu geeignete Vorrichtungen an sich sind Fachleuten bekannt.

Die Erfindung betrifft ferner einen Heizbalg zur Reifenherstellung, der eine mit Vernetzerharz vulkanisierbare Kautschukzusammensetzung umfasst, wobei die Kautschukzusammensetzung ein erfindungsgemäßes modifiziertes Polyorganosiloxan umfasst und mittels des Vernetzerharzes vulkanisiert worden ist.

Die Erfinder haben überraschenderweise gefunden, dass die Verwendung der erfindungsgemäßen Polyorganosiloxane als Weichmacher in einer Kautschukzusammensetzung, die Lebensdauer eines aus dieser Kautschukzusammensetzung hergestellten Heizbalgs zur Reifenherstellung signifikant verlängert, im Vergleich zu einem Heizbalg zur Reifenherstellung, der bei ansonsten gleicher Zusammensetzung und Verarbeitung der Vulkanisationsmischung mit Rizinusöl als Weichmacher (in gleicher Konzentration) hergestellt wird.

Im Kontext der vorliegenden Erfindung wird die Lebensdauer eines Heizbalges anhand eines Probenkörpers im Dauerknickversuch nach De Mattia nach einer Dampfalterung (48h bei 190°C) bestimmt. Dabei wird das Risswachstum der Probenkörper der unterschiedlichen Compounds miteinander verglichen. Je niedriger der Wert für das Risswachstum bei einer bestimmten Anzahl von Beanspruchungszyklen, desto höher ist die Lebensdauer des Heizbalges.

Sollte je nach der genauen Zusammensetzung der Kautschukzusammensetzungen eine etwaige Verringerung der Vernetzungsdichte beobachtet werden, kann dies problemlos durch eine Erhöhung der Konzentration des Vernetzerharzes in der Kautschukzusammensetzung kompensiert werden. Dabei wird die verbesserte Beständigkeit der erfindungsgemäßen Kautschukzusammensetzungen in der relevanten Verwendung in Heizbälgen nicht signifikant beeinträchtigt.

Weitere Aspekte der vorliegenden Erfindung sind in den nachstehenden Absätzen A bis P offenbart.
A. Verwendung eines oder mehrerer modifizierter Polyorganosiloxane als Weichmacher in Kautschukzusammensetzungen, wobei das Polyorganosiloxan 3 oder mehr Siloxaneinheiten und einen oder mehrere organische Anteile R¹ enthält, der eine oder mehrere Kohlenstoff-Kohlenstoff-Mehrfachbindungen und mindestens 4 Kohlenstoffatome aufweist.
B. Verwendung nach Absatz A, dadurch gekennzeichnet, dassR¹ bis zu 15 C-Atome enthält, wobei R¹ insbesondere ein einwertiger ungesättigter Acyloxyrest (d.h. ein Rest vom Typ RCOO-) mit bis zu 15 C-Atomen, wobei der Acylrest endständig eine substituierte oder nicht-substituierte Doppelbindung trägt und über eine Kohlenwasserstoffkette, die bevorzugt mindestens ein Sauerstoffatom in der Kette enthält und bevorzugt mit mindestens einer Hydroxygruppe substituiert ist, an ein Siliciumatom des Grundgerüsts des Polyorganosiloxans gebunden ist.
C. Verwendung nach Absatz 1 oder Absatz 2, dadurch gekennzeichnet, dass das modifizierte Polyorganosiloxan zwei oder mehr organische Anteile R¹ und/oder zusätzlich einen oder mehrere längere Alkylreste R² aufweist, wobei R² eine Kettenlänge von 5 bis 50 Kohlenstoffatomen besitzt.
D. Verwendung nach Absatz 1 oder Absatz 2, dadurch gekennzeichnet, dass der Kautschuk mittels eines oder mehrerer Vernetzerharze vulkanisiert wird, wobei der Kautschuk insbesondere Butylkautschuk, bromierte Copolymere von Isobutylen und p-Methylstyrol oder Mischungen davon umfasst, und Chloroprenkautschuk als Vernetzungshilfsmittel verwendet werden kann.
E. Verwendung nach einem der vorhergehenden Absätze A bis D, dadurch gekennzeichnet, dass die Kautschukzusammensetzung, die das Polyorganosiloxan enthält, einen oder mehrere weitere Weichmacher, die kein Polyorganosiloxan sind, in einer Menge von weniger als 5 Gew.-Teile pro 100 Gew.-Teile Kautschuk (Mischung) enthält.
F. Verwendung nach Absatz E, wobei der weitere von Polyorganosiloxan verschiedene Weichmacher Rizinusöl und/oder ein Kohlenwasserstoffharz umfasst, bevorzugt Rizinusöl umfasst, insbesondere Rizinusöl und/oder ein Kohlenwasserstoffharz ist, insbesondere Rizinusöl ist.
G. Verwendung nach einem der Absätze A bis C, dadurch gekennzeichnet, dass die Kautschukzusammensetzung neben dem modifizierten Polyorganosiloxan keine weiteren Weichmacher enthält.
H. Verwendung nach einem der vorhergehenden Absätze A bis H, dadurch gekennzeichnet, dass die Kautschukzusammensetzung weitere Additive und Bestandteile enthält, die für die Herstellung von Heizbälgen (Bladder) für die Reifenherstellung geeignet sind.
I. Verwendung nach einem der vorhergehenden Absätze A bis H, dadurch gekennzeichnet, dass die Kautschukzusammensetzung nach Vulkanisation zur Verwendung als Heizbalg (Bladder) bei der Reifenherstellung geeignet ist.
J. Verwendung nach einem der Absätze G oder H, dadurch gekennzeichnet, dass die Kautschukzusammensetzung als weitere Bestandteile Füllstoff, Katalysator für eine Harzvernetzung und gegebenenfalls weitere Zuschlagstoffe, insbesondere Homogenisatoren, enthält.
K. Verwendung nach einem der vorhergehenden Absätze D bis J, dadurch gekennzeichnet, dass das Vernetzerharz gegebenenfalls halogeniertes Formaldehyd-Alkylphenolharz ist, wobei der Alkylrest insbesondere C₁- bis C₁₀-Alkyl ist.
L. Verwendung nach einem der vorhergehenden Absätze A bis K, dadurch gekennzeichnet, dass die Menge an Polyorganosiloxan in der Kautschukzusammensetzung 3 bis 8 Gew.-Teile pro 100 Gew.-Teile Kautschuk (Mischung) beträgt und insbesondere dass die Kautschukzusammensetzung Vernetzerharz in einer Konzentration von 2 Gew.-Teile bis 12 Gew.-Teile pro 100 Gew.-Teile Kautschuk (Mischung) umfasst.
M. Verwendung nach einem der vorhergehenden Absätze A bis L, dadurch gekennzeichnet, dass die Lebensdauer eines aus der Kautschukzusammensetzung hergestellten Heizbalgs zur Reifenherstellung, wie mittels des Risswachstums nach *De Mattia* bestimmt, um einen Faktor größer als 1,2 verlängert wird, im Vergleich zu einem Heizbalg zur Reifenherstellung, der bei ansonsten gleicher Zusammensetzung und Verarbeitung der Vulkanisationsmischung mit Rizinusöl als Weichmacher (in gleicher Konzentration) hergestellt wird.
N. Verwendung nach einem der vorhergehenden Absätze A bis M ohne dass eine oder mehrere der folgenden physikalischen Eigenschaften Delta Torque, Modul, Druckverformungsrest nachteilig verändert werden, im Vergleich zu einer Kautschukzusammensetzung, die eine entsprechende Menge an Rizinusöl als Weichmacher enthält.
O. Verfahren zur Herstellung eines Heizbalgs zur Reifenherstellung, bei dem eine Kautschukzusammensetzung, die ein oder mehrere modifizierte Polyorganosiloxane, ein oder mehrere Vernetzerharze zur Vernetzung und gegebenenfalls weitere übliche Additive enthält, mittels des Vernetzerharzes vulkanisiert wird, wobei das modifizierte Polyorganosiloxan und die Kautschukzusammensetzung wie in einem der vorstehenden Absätze A bis O definiert sind.
P. Heizbalg zur Reifenherstellung, der mit Vernetzerharz vulkanisierbarer Kautschukzusammensetzung umfasst, welche Kautschukzusammensetzung modifiziertes Polyorganosiloxan umfasst und mittels des Vernetzerharzes vulkanisiert worden ist, wobei das modifizierte Polyorganosiloxan und die Kautschukzusammensetzung wie in einem der vorstehenden Absätze A bis O definiert sind.

Die Vorteile der Erfindung ergeben sich insbesondere aus den folgenden Beispielen. Alle Mengenangaben beziehen sich, wenn nichts Anderes angegeben ist, auf das Gewicht.

### Beispiele

Herstellung von erfindungsgemäßen Polyorganosiloxanen

Nachfolgend wird die Synthese der erfindungsgemäßen Polyorganosiloxane anhand eines ausgewählten Beispiels ("**POS**") illustriert:
In einer ersten Reaktionsstufe werden in einem Dreihalskolben 7,63g (0,057 mol) Tetramethyldisiloxan, 14,8g (0,006 mol) Polymethylhydrogensiloxan und 76,3g (0,26 mol) Octamethylcyclotetrasiloxan in Gegenwart eines Kalzium-Bentonit-Katalysators (3%) zu einem Hydrogendimethylpolysiloxan (M^{H}₂D^{H}₄D₁₈) umgesetzt [d.h. von den Siliziumatomen der insgesamt (durchschnittlich) 24 Siloxaneinheiten in der Verbindung sind (durchschnittlich) beide endständige (M^{H}) und 4 seitenständige (D^{H}) mit jeweils einem Wasserstoffatom substituiert und der nachfolgenden Funktionalisierung zugänglich].

In der zweiten Reaktionsstufe werden 64,63g (0,038 mol) des Hydrogendimethylpolysiloxans vorgelegt und auf 80°C erwärmt. Anschließend erfolgt die Zugabe des Katalysators (10 ppm Speier-Katalysator) und eine langsame Zugabe von 8,38g (0,033 mol) eines α-Olefins (Kettenlänge C₁₄ bis C₂₂). Die Reaktion läuft bei 90°C ab.

In der dritten Reaktionsstufe werden 26,89g (0,236 mol) Allylglycidether langsam bei 80°C zugegeben. Der Umsetzungsgrad wird über eine Infrarotspektroskopische HSi-Messung verfolgt. Wird kein HSi mehr detektiert, ist die Reaktion abgeschlossen und es erfolgt eine Destillation überschüssiger Bestandteile.

In der vierten Reaktionsstufe werden 83,91g (0,034 mol) des unter Stufe 3 entstandenen Produktes mit einem Katalysator (Triethylamin oder 1.4-Diazabicyclo[2.2.2]octan 0,5%) und einem Inhibitor (Butylhydroxytoluol 0,2%) auf 80°C erwärmt und es werden 15,09g (0,175 mol) Methacrylsäure langsam zugetropft. Die danach stattfindende Reaktion läuft bei 95°C ab und wird über die Säurezahl überwacht.

POS ist ein kurzes, di-endständig und poly-seitenständiges, funktionalisiertes Polyorganosiloxan.

### Chemikalien

Es wurden die folgenden Chemikalien eingesetzt (**Tabelle 1**).

**Tabelle 1 - Chemikalien**

| **Markenname** | **Erläuterung** | **Hersteller/ Lieferant** |
|---|---|---|
| Butyl RB 301 | Copolymer aus Isobutylen und Isopren mit mittlerem Isopren-Anteil. Mooney Viskosität ML(1+8) bei 125°C: 46-56 MU. | Arlanxeo |
| Neoprene WRT | Copolymer aus Chloropren und 2,3-Dichlor-1,3-butadien mit einer Mooney Viskosität ML (1+4) bei 100°C von 41-51 MU. | Denka Polymers |
| Luvomaxx BC N-330 | Ruß | Lehmann & Voss & Co |
| Zinkoxid Harzsiegel GR | Zinkoxid (ZnO) | Norzinco GmbH |
| Struktol^{®} 40 MS Flakes | Gemisch aus dunklen aromatischen und aliphatischen Kohlenwasserstoffharzen | Schill + Seilacher "Struktol" GmbH |
| ALBERDINGK^{®} Rizinusöl First | Rizinusöl | Alberdingk Boley GmbH |
| SP 1045H | Octylphenol-Vernetzerharz mit einem Methylol-Gehalt von 9,5% bis 11,0 % | SI Group |

Ferner wurde das folgende Polyorganosiloxan erfindungsgemäß eingesetzt:
Das oben hergestellte modifizierte Polydimethylsiloxan **POS.**

### Testmethoden

Es wurden die folgenden Testmethoden verwendet.
**Mooney Viskosität:** ISO 289-1 Unvulkanisierter Kautschuk-Bestimmungen unter Verwendung eines Scherscheiben-Viskosimeters - Teil 1: Bestimmung der Mooney-Viskosität.
**Shore A-Härte:** DIN ISO 7619-1:2012-02 Elastomere oder thermoplastische Elastomere - Bestimmung der Eindringhärte - Teil 1: Durometer-Verfahren (Shore-Härte).
**Zugfestigkeit/Spannungswerte/Bruchdehnung:** DIN 53504 Prüfung von Kautschuk und Elastomeren - Bestimmung von Zugfestigkeit, Zugfestigkeit, Reißdehnung und Spannungswerten im Zugversuch.
**Weiterreißwiderstand:** DIN ISO 34-1 DIN Elastomere oder thermoplastische Elastomere - Bestimmung des Weiterreißwiderstandes - Teil 1: Streifen-, winkel- und bogenförmige Probekörper.
**Risswachstum:** DIN ISO 132 Elastomere oder thermoplastische Elastomere - Bestimmung von Rissbildung und Risswachstum (De Mattia).
**Vernetzung:** DIN 53529 Teil 2 - Prüfung von Kautschuken und Elastomeren; Vulkametrie; Bestimmung des Vulkanisationsverlaufes und reaktionskinetische Auswertung von Vernetzungsisothermen.

### Kautschukzusammensetzungen

Es wurden die folgenden Kautschukzusammensetzungen **1** bis **4** hergestellt, die die folgenden Bestandteile enthalten, wobei alle Mengenangaben in Gewichtsteilen sind (**Tabelle 2**).

**Tabelle 2 - Mengen der Kautschukzusammensetzungsbestandteile**

| | **1** | **2** | **3** | **4** |
|---|---|---|---|---|
| Butyl RB 301 (IIR) | 100 | 100 | 100 | 100 |
| Neoprene WRT | 5 | 5 | 5 | 5 |
| Luvomaxx BC N-330 | 50 | 50 | 50 | 50 |
| ZnO Harzsiegel | 5 | 5 | 5 | 5 |
| Struktol 40 MS Flakes | 5 | 5 | 5 | 5 |
| **Rizinusöl** | **6** | **3** | **-** | **-** |
| **POS** | **-** | **3** | **6** | **6** |
| SP 1045H | 8 | 8 | 8 | 10 |
| Summe | 179 | 179 | 179 | 181 |

Die Kautschukzusammensetzungen **1** bis **4** wurden, wie nachfolgenden beschrieben hergestellt.

### Kautschukzusammensetzung 1

Eine Mischung von 50 Gewichtsteilen Ruß (Luvomaxx BC N-330), 5 Gewichtsteilen Zinkoxid (Harzsiegel GR), 5 Gewichtsteilen Struktol 40 MS Flakes, 6 Gewichtsteilen Rizinusöl sowie 100 Gewichtsteilen Butylkautschuk (Butyl RB 301) und 5 Gewichtsteilen Chloropren-Kautschuk (Neoprene WRT) wurde im Upsidedown-Mischverfahren in einen Labor-Innenmischer bei 80°C Starttemperatur und 70 Umdrehungen/Minute gegeben.

Nach 30 Sekunden wurde der Stempel angehoben und gefegt sowie nach 180 Sekunden die Mischung ausgeworfen.

Nach 24 Stunden wurden in die resultierende Zusammensetzung auf dem Walzwerk bei 100°C 8 Gewichtsteile von dem Octylphenol-Vernetzerharz (SP 1045) eingearbeitet. Es wurde insgesamt 10 Minuten gemischt.

### Kautschukzusammensetzung 2

Eine Mischung von 50 Gewichtsteilen Ruß (Luvomaxx BC N-330), 5 Gewichtsteilen Zinkoxid (Harzsiegel GR), 5 Gewichtsteilen Struktol 40 MS Flakes 3 Gewichtsteilen Rizinusöl und 3 Gewichtsteile POS sowie 100 Gewichtsteilen Butylkautschuk (Butyl RB 301) und 5 Gewichtsteilen Chloropren-Kautschuk (Neoprene WRT) wurde im Upsidedown-Mischverfahren in einen Labor-Innenmischer bei 80°C Starttemperatur und 70 Umdrehungen/Minute gegeben.

Nach 30 Sekunden wurde der Stempel angehoben und gefegt sowie nach 180 Sekunden die Mischung ausgeworfen.

Nach 24 Stunden wurden in die resultierende Zusammensetzung auf dem Walzwerk bei 100°C 8 Gewichtsteile von dem Octylphenol-Vernetzerharz (SP 1045) eingearbeitet. Es wurde insgesamt 10 Minuten gemischt.

### Kautschukzusammensetzung 3

Eine Mischung von 50 Gewichtsteilen Ruß (Luvomaxx BC N-330), 5 Gewichtsteilen Zinkoxid (Harzsiegel GR), 5 Gewichtsteilen Struktol 40 MS Flakes 6 Gewichtsteilen POS sowie 100 Gewichtsteilen Butylkautschuk (Butyl RB 301) und 5 Gewichtsteilen Chloropren-Kautschuk (Neoprene WRT) wurde im Upsidedown-Mischverfahren in einen Labor-Innenmischer bei 80°C Starttemperatur und 70 Umdrehungen/Minute gegeben.

Nach 30 Sekunden wurde der Stempel angehoben und gefegt sowie nach 180 Sekunden die Mischung ausgeworfen.

Nach 24 Stunden wurden in die resultierende Zusammensetzung auf dem Walzwerk bei 100°C 8 Gewichtsteile von dem Octylphenol-Vernetzerharz (SP 1045) eingearbeitet. Es wurde insgesamt 10 Minuten gemischt.

### Kautschukzusammensetzung 4

Eine Mischung von 50 Gewichtsteilen Ruß (Luvomaxx BC N-330), 5 Gewichtsteilen Zinkoxid (Harzsiegel GR), 5 Gewichtsteilen Struktol 40 MS Flakes 6 Gewichtsteilen POS sowie 100 Gewichtsteilen Butylkautschuk (Butyl RB 301) und 5 Gewichtsteilen Chloropren-Kautschuk (Neoprene WRT) wurde im Upsidedown-Mischverfahren in einen Labor-Innenmischer bei 80°C Starttemperatur und 70 Umdrehungen/Minute gegeben.

Nach 30 Sekunden wurde der Stempel angehoben und gefegt sowie nach 180 Sekunden die Mischung ausgeworfen.

Nach 24 Stunden wurden in die resultierende Zusammensetzung auf dem Walzwerk bei 100°C 10 Gewichtsteile von dem Octylphenol-Vernetzerharz (SP 1045) eingearbeitet. Es wurde insgesamt 10 Minuten gemischt.

### Vernetzungsgrad der Kautschukzusammensetzungen 1 bis 4

Mit einem RPA 2000-Gerät wurde in einer isothermen Messung bei 210°C das Drehmoment der Kautschukzusammensetzungen **1** bis **4** als Maß für die Vernetzung bestimmt (**Tabelle 3**).

**Tabelle 3 - Vernetzung RPA 2000 bei 210°C**

| | **1** | **2** | **3** | **4** |
|---|---|---|---|---|
| Drehmoment ML [dNm] | 1,87 | 1,91 | 2,03 | 1,93 |
| Drehmoment MH [dNm] | 8,05 | 6,49 | 5,70 | 6,74 |
| | | | | |
| delta torque (MH-ML) [dNm] | 6,18 | 4,58 | 3,67 | 4,81 |
| | | | | |
| tc 10% [min] | 0,84 | 0,68 | 0,57 | 0,61 |
| tc 90% [min] | 13,05 | 9,62 | 6,53 | 7,78 |

### Vulkanisation der Kautschukzusammensetzungen 1 bis 4

Aus den Kautschukzusammensetzungen **1** bis **4** wurden jeweils 2 mm-Prüfplatten und 6 mm-Prüfkörper hergestellt. Für die Vulkanisation wurden die 2 mm-Prüfplatten für 13 Minuten bei 210°C vulkanisiert, die 6 mm-Prüfkörper wurden für 14 Minuten unter gleichen Bedingungen vulkanisiert. Die folgenden Eigenschaften der vulkanisierten Kautschukzusammensetzungen **1** bis **4** wurden bestimmt (**Tabelle 4**).

**Tabelle 4 - Eigenschaften der vulkanisierten Kautschukzusammensetzungen 1 bis 4**

| | **1** | **2** | **3** | **4** |
|---|---|---|---|---|
| Vulk.-Zeit 2 mm @ 210°C [min] | 13 | 13 | 13 | 13 |
| Vulk.-Zeit 6 mm @ 210°C [min] | 14 | 14 | 14 | 14 |
| | | | | |
| Härte SH A [SH E] | 56 | 52 | 53 | 58 |
| Elastizität [%] | 8 | 7 | 9 | 9 |
| Zugfestigkeit [MPa] | 12,3 | 12,0 | 9,8 | 11,5 |
| *Standardabw. (sigma n-1)* | *1,08* | *0,38* | *0,42* | *1,12* |
| Bruchdehnung [%] | 640 | 741 | 697 | 670 |
| *Standardabw. (sigma n-1)* | *45,39* | *15,63* | *31,91* | *65,66* |
| Modul 100% [MPa] | 1,5 | 1,1 | 1,1 | 1,4 |
| Modul 300% [MPa] | 4,2 | 3,1 | 2,8 | 3,7 |
| Modul 500 % [MPa] | 8, 4 | 6, 6 | 5, 9 | 7,6 |
| Weiterreißw. Trouser [kN/m] | 16,6 | 16,5 | 15,5 | 16,6 |
| | | | | |
| DVR 24h / 100°C 25% [%] | 28,4 | 33,6 | 41,0 | 28,2 |
| Dichte [g/cm3] | 1,110 | 1,112 | 1,107 | 1,115 |

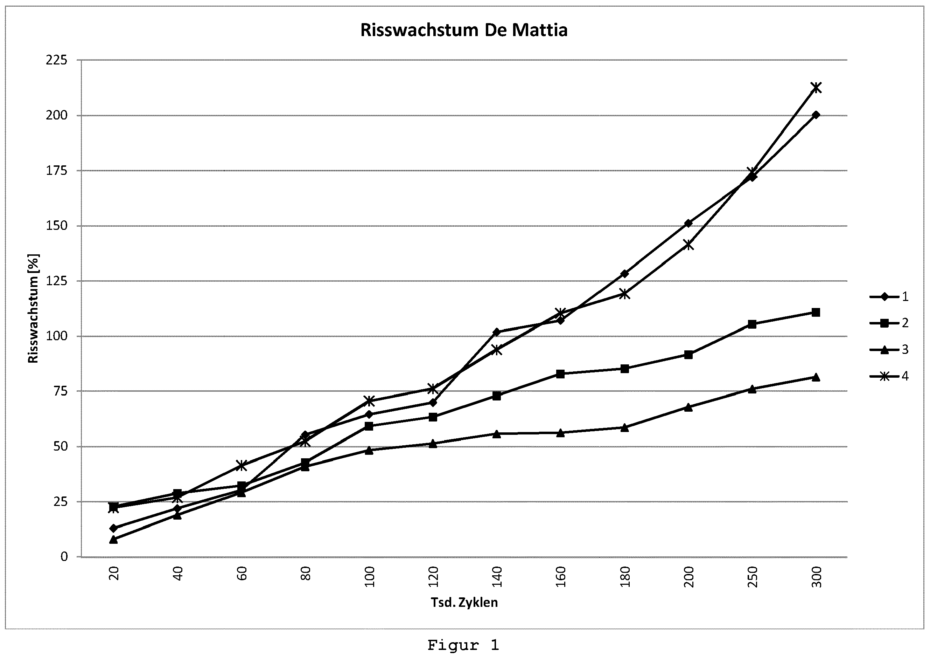

Die vulkanisierten Kautschukzusammensetzungen **1** bis **4** wurden zudem im Dauerknickversuch nach De Mattia untersucht (**Tabelle 5** und **Figur 1**).

**Tabelle 5 - Die vulkanisierten Kautschukzusammensetzungen 1 bis 4 im Dauerknickversuch nach De Mattia [%]**

| **Tsd. Zyklen** | **1** | **2** | **3** | **4** |
|---|---|---|---|---|
| 20 | 13,0 | 22,8 | 8, 0 | 22,3 |
| 40 | 21,9 | 28,9 | 19,0 | 26,9 |
| 60 | 30,2 | 32,4 | 29, 1 | 41,5 |
| 80 | 55,2 | 42,7 | 41,0 | 52,3 |
| 100 | 64,5 | 59,2 | 48,4 | 70,6 |
| 120 | 69,9 | 63,3 | 51,4 | 76,1 |
| 140 | 101,8 | 72,9 | 55,6 | 93,8 |
| 160 | 107,0 | 82,9 | 56,1 | 110,3 |
| 180 | 128,3 | 85,2 | 58,5 | 119,2 |
| 200 | 151,2 | 91,6 | 67,8 | 141,4 |
| 250 | 171,9 | 105,4 | 76,0 | 174,2 |
| 300 | 200,3 | 110,8 | 81,4 | 212,7 |

### Dampfalterung der vulkanisierten Kautschukzusammensetzungen 1 bis 4

Die vulkanisierten Kautschukzusammensetzungen **1** bis **4** wurden einer Dampfalterung für 48h bei 190°C ausgesetzt. Die folgenden Eigenschaften der vulkanisierten Kautschukzusammensetzungen **1** bis **4** wurden nach der Dampfalterung bestimmt. Zudem sind nachfolgend auch die durch die Dampfalterung hervorgerufenen Änderungen der entsprechenden Eigenschaften angegeben (**Tabelle 6**).

**Tabelle 6 - Eigenschaften der vulkanisierten Kautschukzusammensetzungen 1 bis 4 nach Dampfalterung (48h bei 190°C) sowie die entsprechende Änderung der Eigenschaften durch die Dampfalterung**

| | **1** | **2** | **3** | **4** |
|---|---|---|---|---|
| Härte SH A [SH E] | 71 | 63 | n.a. | 65 |
| *Änderung SH A [SH E]* | *15* | *11* | *n.a.* | *7* |
| Elastizität [%] | 11 | 10 | n.a. | 10 |
| *Änderung Elastizität [%]* | *3* | *3* | *n.a.* | *1* |
| Zugfestigkeit [MPa] | 13,2 | 13,0 | 11,4 | 13,3 |
| *Änderung Zugfestigkeit [%]* | *7,3* | *8,3* | *16,3* | *15,7* |
| Bruchdehnung [%] | 537 | 607 | 615 | 599 |
| *Änderung Bruchdehnung [%]* | *-16,1* | *-18,1* | *-11,8* | *-10,6* |
| Modul 100% [MPa] | 2,3 | 1,7 | 1,4 | 1,7 |
| *Änderung Modul 100% [%]* | *53,3* | *54,5* | *27,3* | *21,4* |
| Modul 300% [MPa] | 6,5 | 5,1 | 4,2 | 5,2 |
| *Änderung Modul 100% [%]* | *54,8* | *64,5* | *50,0* | *40,5* |
| Modul 500% [MPa] | 12,1 | 10,2 | 8, 6 | 10,5 |
| *Änderung Modul 100% [%]* | *44,0* | *54,5* | *45,8* | *38,2* |
| Weiterreißw. Trouser [kN/m] | 18,9 | 17,7 | 16,6 | 17,1 |
| *Änderung Weiterreißw. Trouser [%]* | *13,9* | *7,3* | *7,1* | *3,0* |

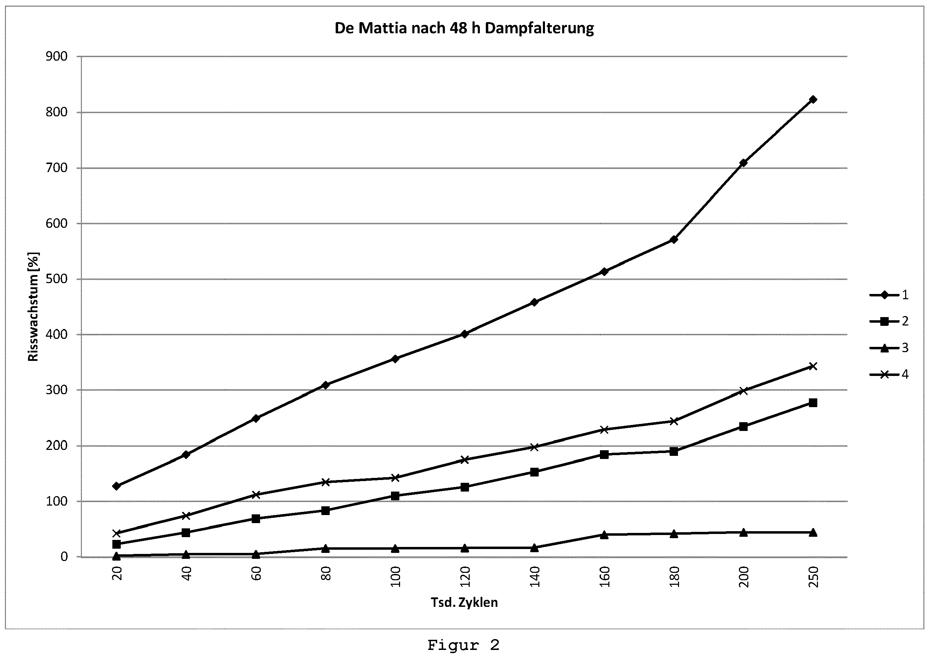

Die vulkanisierten Kautschukzusammensetzungen **1** bis **4** wurden zudem nach der Dampfalterung (48h bei 190°C) im Dauerknickversuch nach De Mattia untersucht (**Tabelle 7** und **Figur 2**).

**Tabelle 7 - Die vulkanisierten Kautschukzusammensetzungen 1 bis 4 nach Dampfalterung (48h bei 190°C) im Dauerknickversuch nach De Mattia [%]**

| **Tsd. Zilozyklen** | **1** | **2** | **3** | **4** |
|---|---|---|---|---|
| 20 | 45,8 | 9,1 | 1,3 | 10,9 |
| 40 | 127,5 | 23,2 | 1,9 | 42,5 |
| 60 | 183,8 | 44,4 | 4,9 | 73,9 |
| 80 | 249,0 | 68,7 | 5,1 | 111,9 |
| 100 | 308,5 | 83,4 | 15,8 | 134,8 |
| 120 | 356,1 | 109,9 | 15,8 | 142,5 |
| 140 | 401,0 | 126,0 | 16,4 | 174,9 |
| 160 | 457,8 | 153,3 | 16,6 | 197,4 |
| 180 | 513,3 | 184,5 | 40,5 | 228,5 |
| 200 | 570,7 | 189,9 | 42,1 | 243,9 |
| 250 | 709,2 | 234,5 | 44,5 | 298,2 |
| 300 | 823,2 | 277,8 | 44,5 | 342,9 |

### Auswertung der Messdaten

Kautschukzusammensetzung **1** veranschaulicht den Stand der Technik und dient als Vergleich (Kontrolle). Durch die Verwendung von 3 phr **POS** in Kombination mit 3 phr Rizinusöl in Kautschukzusammensetzung **2** oder 6 phr **POS** in Kautschukzusammensetzung **3** wird die Vulkameterkurve in Abhängigkeit der eingesetzten Menge **POS** herabgesetzt. Durch den Einsatz von 6 phr **POS** in Kombination mit einem um 2 phr höheren Einsatz Vernetzerharz SP 1045 erreicht die Vulkameterkurve von in Kautschukzusammensetzung **4** ein vergleichbares Niveau wie die von in Kautschukzusammensetzung **1.**

Die Betrachtung der Ergebnisse nach Dampfalterung (48h bei 190°C) im Autoklaven liefert einen vergleichbaren Trend. Hier ist zu beachten, dass die Probekörper der vulkanisierten Kautschukzusammensetzung **3** signifikant aufgequollen waren, so dass keine physikalischen Werte bestimmt werden konnten. Dies kann auf eine zu geringe Vernetzung der vulkanisierten Kautschukzusammensetzung **3** zurückzuführen sein.

Die vulkanisierte Kautschukzusammensetzung **4** verfügt über ein sehr ausgeglichenes Eigenschaftsbild. Es ist besonders erwähnenswert, dass die vulkanisierte Kautschukzusammensetzung **4** im Risswachstum nach De Mattia sich nun deutlich von der Kontrolle (Kautschukzusammensetzung **1**) absetzt und eine signifikant verbesserte Rissbeständigkeit aufweist.

Außerdem zeigt Kautschukzusammensetzung **1** eine schlechtere Flexibilität des Vulkanisats. Dies wird durch die starken Erhöhungen der Shore Härte, der Tensile Strength und des Modul verdeutlicht.

Die Verwendung von nur 3 phr **POS** in Kombination mit 3 phr Rizinusöl (Kautschukzusammensetzung **2**) führt ebenfalls zu guten Ergebnissen im Dauerknickversuch (De Mattia-Test).

## Patentansprüche

1. Verwendung eines oder mehrerer modifizierter Polyorganosiloxane als Weichmacher in Kautschukzusammensetzungen, wobei der Kautschuk mittels eines oder mehrerer Vernetzerharze vulkanisiert wird, wobei das Polyorganosiloxan 3 oder mehr Siloxaneinheiten und einen oder mehrere organische Anteile R¹ enthält, der eine oder mehrere Kohlenstoff-Kohlenstoff-Mehrfachbindungen und mindestens 4 Kohlenstoffatome aufweist.

2. Verwendung nach Anspruch 1, **dadurch gekennzeichnet**, dassR¹ bis zu 15 C-Atome enthält, wobei R¹ insbesondere ein einwertiger ungesättigter Acyloxyrest (d.h. ein Rest vom Typ RCOO-) mit bis zu 15 C-Atomen, wobei der Acylrest endständig eine substituierte oder nicht-substituierte Doppelbindung trägt und über eine Kohlenwasserstoffkette, die bevorzugt mindestens ein Sauerstoffatom in der Kette enthält und bevorzugt mit mindestens einer Hydroxygruppe substituiert ist, an ein Siliciumatom des Grundgerüsts des Polyorganosiloxans gebunden ist.

3. Verwendung nach Anspruch 1 oder Anspruch 2, **dadurch gekennzeichnet, dass** das modifizierte Polyorganosiloxan zwei oder mehr organische Anteile R¹ und/oder zusätzlich einen oder mehrere längere Alkylreste R² aufweist, wobei R² eine Kettenlänge von 5 bis 50 Kohlenstoffatomen besitzt.

4. Verwendung nach Anspruch 1 oder Anspruch 2, **dadurch gekennzeichnet, dass** der Kautschuk Butylkautschuk, bromierte Copolymere von Isobutylen und p-Methylstyrol oder Mischungen davon umfasst, und Chloroprenkautschuk als Vernetzungshilfsmittel verwendet werden kann.

5. Verwendung nach einem der vorhergehenden Ansprüche, **dadurch gekennzeichnet, dass** die Kautschukzusammensetzung, die das Polyorganosiloxan enthält, einen oder mehrere weitere Weichmacher, die kein Polyorganosiloxan sind, in einer Menge von weniger als 5 Gew.-Teile pro 100 Gew.-Teile Kautschuk (Mischung) enthält.

6. Verwendung nach Anspruch 5, wobei der weitere von Polyorganosiloxan verschiedene Weichmacher Rizinusöl und/oder ein Kohlenwasserstoffharz umfasst, bevorzugt Rizinusöl umfasst, insbesondere Rizinusöl und/oder ein Kohlenwasserstoffharz ist, insbesondere Rizinusöl ist.

7. Verwendung nach einem der Ansprüche 1 bis 3, **dadurch gekennzeichnet, dass** die Kautschukzusammensetzung neben dem modifizierten Polyorganosiloxan keine weiteren Weichmacher enthält.

8. Verwendung nach einem der vorhergehenden Ansprüche, **dadurch gekennzeichnet, dass** die Kautschukzusammensetzung weitere Additive und Bestandteile enthält, die für die Herstellung von Heizbälgen (Bladder) für die Reifenherstellung geeignet sind.

9. Verwendung nach einem der vorhergehenden Ansprüche, **dadurch gekennzeichnet, dass** die Kautschukzusammensetzung nach Vulkanisation zur Verwendung als Heizbalg (Bladder) bei der Reifenherstellung geeignet ist.

10. Verwendung nach einem der Ansprüche 7 oder 8, **dadurch gekennzeichnet, dass** die Kautschukzusammensetzung als weitere Bestandteile Füllstoff, Katalysator für eine Harzvernetzung und gegebenenfalls weitere Zuschlagstoffe, insbesondere Homogenisatoren, enthält.

11. Verwendung nach einem der vorhergehenden Ansprüche 1 bis 9, **dadurch gekennzeichnet, dass** das Vernetzerharz gegebenenfalls halogeniertes Formaldehyd-Alkylphenolharz ist, wobei der Alkylrest insbesondere C₁- bis C₁₀-Alkyl ist.

12. Verwendung nach einem der vorhergehenden Ansprüche, **dadurch gekennzeichnet, dass** die Menge an Polyorganosiloxan in der Kautschukzusammensetzung 3 bis 8 Gew.-Teile pro 100 Gew.-Teile Kautschuk (Mischung) beträgt und insbesondere dass die Kautschukzusammensetzung Vernetzerharz in einer Konzentration von 2 Gew.-Teile bis 12 Gew.-Teile pro 100 Gew.-Teile Kautschuk (Mischung) umfasst.

13. Verwendung nach einem der vorhergehenden Ansprüche, **dadurch gekennzeichnet, dass** die Gesamtzahl der Siloxaneinheiten der erfindungsgemäßen Polyorganosiloxane 10 bis 100, bevorzugter 15 bis 70, insbesondere 20 bis 50 beträgt.

14. Verwendung nach einem der vorhergehenden Ansprüche, **dadurch gekennzeichnet, dass** die Lebensdauer eines aus der Kautschukzusammensetzung hergestellten Heizbalgs zur Reifenherstellung, wie mittels des Risswachstums nach *De Mattia* gemessen gemäß DIN ISO 132 bestimmt, um einen Faktor größer als 1,2 verlängert wird, im Vergleich zu einem Heizbalg zur Reifenherstellung, der bei ansonsten gleicher Zusammensetzung und Verarbeitung der Vulkanisationsmischung mit Rizinusöl als Weichmacher (in gleicher Konzentration) hergestellt wird.

15. Verwendung nach einem der vorhergehenden Ansprüche ohne dass eine oder mehrere der folgenden physikalischen Eigenschaften Delta Torque, gemessen mittels isothermer Messung bei 210°C, Modul, gemessen gemäß DIN 53504, Druckverformungsrest (24h/100°C 25%) nachteilig verändert werden, im Vergleich zu einer Kautschukzusammensetzung, die eine entsprechende Menge an Rizinusöl als Weichmacher enthält.

16. Verfahren zur Herstellung eines Heizbalgs zur Reifenherstellung, bei dem eine Kautschukzusammensetzung, die ein oder mehrere modifizierte Polyorganosiloxane, ein oder mehrere Vernetzerharze zur Vernetzung und gegebenenfalls weitere übliche Additive enthält, mittels des Vernetzerharzes vulkanisiert wird, wobei das modifizierte Polyorganosiloxan und die Kautschukzusammensetzung wie in einem der vorstehenden Ansprüche 1 bis 14 definiert sind.

17. Heizbalg zur Reifenherstellung, der mit Vernetzerharz vulkanisierbarer Kautschukzusammensetzung umfasst, welche Kautschukzusammensetzung modifiziertes Polyorganosiloxan umfasst und mittels des Vernetzerharzes vulkanisiert worden ist, wobei das modifizierte Polyorganosiloxan und die Kautschukzusammensetzung wie in einem der vorstehenden Ansprüche 1 bis 14 definiert sind.

## Claims

1. Use of one or more modified polyorganosiloxanes as plasticizers in rubber compositions, wherein the rubber is vulcanized by means of one or more crosslinking resins, wherein the polyorganosiloxane contains 3 or more siloxane units and one or more organic moieties R¹, which have one or more carbon-carbon multiple bonds and at least 4 carbon atoms.

2. Use according to claim 1, **characterized in that** R¹ contains up to 15 C atoms, wherein R¹ is in particular a monovalent unsaturated acyloxy radical (i.e. a radical of the RCOO- type) with up to 15 C atoms, wherein the acyl radical terminally carries a substituted or unsubstituted double bond and is bound to a silicon atom of the backbone of the polyorganosiloxane via a hydrocarbon chain, which preferably contains at least one oxygen atom in the chain and is preferably substituted with at least one hydroxyl group.

3. Use according to claim 1 or claim 2, **characterized in that** the modified polyorganosiloxane has two or more organic moieties R¹ and/or additionally one or more longer alkyl radicals R², wherein R² has a chain length of from 5 to 50 carbon atoms.

4. Use according to claim 1 or claim 2, **characterized in that** the rubber comprises butyl rubber, brominated copolymers of isobutylene and p-methylstyrene or mixtures thereof, and chloroprene rubber can be used as crosslinking aid.

5. Use according to one of the preceding claims, **characterized in that** the rubber composition which contains the polyorganosiloxane contains one or more further plasticizers, which are not polyorganosiloxanes, in a quantity of less than 5 parts by weight per 100 parts by weight rubber (mixture).

6. Use according to claim 5, wherein the further plasticizer that is different from polyorganosiloxane comprises castor oil and/or a hydrocarbon resin, preferably comprises castor oil, in particular is castor oil and/or a hydrocarbon resin, in particular is castor oil.

7. Use according to one of claims 1 to 3, **characterized in that** the rubber composition contains no further plasticizers in addition to the modified polyorganosiloxane.

8. Use according to one of the preceding claims, **characterized in that** the rubber composition contains further additives and constituents which are suitable for the production of bladders for tyre production.

9. Use according to one of the preceding claims, **characterized in that** the rubber composition, after vulcanization, is suitable for use as a bladder in tyre production.

10. Use according to one of claims 7 or 8, **characterized in that** the rubber composition contains, as further constituents, filler, catalyst for a resin crosslinking and optionally further additives, in particular homogenizers.

11. Use according to one of the preceding claims 1 to 9, **characterized in that** the crosslinking resin is optionally halogenated alkylphenol-formaldehyde resin, wherein the alkyl radical is in particular C₁ to C₁₀ alkyl.

12. Use according to one of the preceding claims, **characterized in that** the quantity of polyorganosiloxane in the rubber composition is 3 to 8 parts by weight per 100 parts by weight rubber (mixture) and in particular **in that** the rubber composition comprises crosslinking resin in a concentration of from 2 parts by weight to 12 parts by weight per 100 parts by weight rubber (mixture).

13. Use according to one of the preceding claims, **characterized in that** the total number of siloxane units of the polyorganosiloxanes according to the invention is 10 to 100, more preferably 15 to 70, in particular 20 to 50.

14. Use according to one of the preceding claims, **characterized in that** the service life of a bladder for tyre production produced from the rubber composition is extended by a factor of greater than 1.2, as determined by means of the crack growth according to *De Mattia* according to DIN 132, compared with a bladder for tyre production which is produced with castor oil as plasticizer (in the same concentration) and an otherwise identical composition and processing of the vulcanization mixture.

15. Use according to one of the preceding claims without disadvantageously changing one or more of the following physical properties: delta torque determined according to an isothermal measurement at 210°C, modulus determined according to DIN 53504, compression set (24h/100°C 25%), compared with a rubber composition which contains a corresponding quantity of castor oil as plasticizer.

16. Method for producing a bladder for tyre production, in which a rubber composition which contains one or more modified polyorganosiloxanes, one or more crosslinking resins for crosslinking and optionally further conventional additives is vulcanized by means of the crosslinking resin, wherein the modified polyorganosiloxane and the rubber composition are as defined in one of the above claims 1 to 14.

17. Bladder for tyre production, which comprises a rubber composition that can be vulcanized using crosslinking resin, which rubber composition comprises modified polyorganosiloxane and has been vulcanized by means of the crosslinking resin, wherein the modified polyorganosiloxane and the rubber composition are as defined in one of the above claims 1 to 14.

## Revendications

1. Utilisation d'un ou de plusieurs polyorganosiloxanes modifiés en tant que plastifiant dans des compositions de caoutchouc, le caoutchouc étant vulcanisé au moyen d'une ou de plusieurs résines de réticulation, le polyorganosiloxane contenant 3 ou plus de trois unités siloxane et une ou plusieurs fractions organiques R¹, présentant une ou plusieurs liaisons multiples carbone-carbone et au moins 4 atomes de carbone.

2. Utilisation selon la revendication 1, **caractérisée en ce que** R¹ contient jusqu'à 15 atomes de C, R¹ étant en particulier un radical acyloxy monovalent insaturé (c'est-à-dire un radical du type RCOO-) ayant jusqu'à 15 atomes de C, le radical acyle portant en fin de terminaison une double liaison substituée ou non substituée et étant lié à un atome de silicium du squelette de base du polyorganosiloxane au moyen d'une chaîne hydrocarbonée, qui contient de préférence au moins un atome d'oxygène dans la chaîne et est substituée de préférence par au moins un groupe hydroxy.

3. Utilisation selon la revendication 1 ou la revendication 2, **caractérisée en ce que** le polyorganosiloxane modifié présente deux ou plus de deux fractions organiques R¹ et/ou, en plus, un ou plusieurs radicaux alkyle plus longs R², R² possédant une longueur de chaîne de 5 à 50 atomes de carbone.

4. Utilisation selon la revendication 1 ou la revendication 2, **caractérisée en ce que** le caoutchouc comprend un caoutchouc de butyle, des copolymères bromés d'isobutylène et de p-méthylstyrène ou des mélanges de ceux-ci, et **en ce que** le caoutchouc de chloroprène peut être utilisé en tant qu'auxiliaire de réticulation.

5. Utilisation selon l'une des revendications précédentes, **caractérisée en ce que** la composition de caoutchouc qui contient le polyorganosiloxane contient un ou plusieurs autres plastifiants qui ne sont pas des polyorganosiloxanes, en une quantité inférieure à 5 parties en poids pour 100 parties en poids de caoutchouc (mélange).

6. Utilisation selon la revendication 5, où l'autre plastifiant différent du polyorganosiloxane comprend de l'huile de ricin et/ou une résine hydrocarbonée, de préférence de l'huile de ricin, en particulier est l'huile de ricin et/ou une résine hydrocarbonée, en particulier l'huile de ricin.

7. Utilisation selon l'une des revendications 1 à 3, **caractérisée en ce que** la composition de caoutchouc ne contient pas d'autres plastifiants en plus du polyorganosiloxane modifié.

8. Utilisation selon l'une des revendications précédentes, **caractérisée en ce que** la composition de caoutchouc contient d'autres additifs et composants, qui sont appropriés pour la fabrication de vessies (bladder) pour la fabrication de pneumatiques.

9. Utilisation selon l'une des revendications précédentes, **caractérisée en ce que** la composition de caoutchouc est appropriée lors de la fabrication de pneumatiques après vulcanisation pour l'utilisation en tant que vessie (bladder).

10. Utilisation selon l'une des revendications 7 ou 8, **caractérisée en ce que** la composition de caoutchouc contient en tant qu'autres composants une charge, un catalyseur pour une réticulation de la résine et le cas échéant d'autres substances additives, en particulier des homogénéisateurs.

11. Utilisation selon l'une des revendications précédentes 1 à 9, **caractérisée en ce que** la résine de réticulation est le cas échéant une résine d'alkylphénol-formaldéhyde halogénée, le radical alkyle étant en particulier un alkyle en C₁ à C₁₀.

12. Utilisation selon l'une des revendications précédentes, **caractérisée en ce que** la quantité de polyorganosiloxane dans la composition de caoutchouc est de 3 à 8 parties en poids pour 100 parties en poids de caoutchouc (mélange) et en particulier **en ce que** la composition de caoutchouc comprend une résine de réticulation en une concentration de 2 parties en poids à 12 parties en poids pour 100 parties en poids de caoutchouc (mélange).

13. Utilisation selon l'une des revendications précédentes, **caractérisée en ce que** le nombre total des unités siloxane des polyorganosiloxanes selon l'invention est de 10 à 100, de manière plus préférée de 15 à 70, en particulier de 20 à 50.

14. Utilisation selon l'une des revendications précédentes, **caractérisée en ce que** la durée de vie d'une vessie fabriquée à partir de la composition de caoutchouc pour la fabrication de pneumatiques, telle que déterminée au moyen de la croissance de fissure d'après De Mattia mesurée selon la norme DIN ISO 132, est allongée d'un facteur supérieur à 1,2, par rapport à une vessie pour la fabrication de pneumatiques qui est fabriquée pour une même composition et transformation par ailleurs du mélange de vulcanisation avec de l'huile de ricin comme plastifiant (en la même concentration).

15. Utilisation selon l'une des revendications précédentes sans qu'une ou plusieurs des propriétés physiques suivantes consistant en couple Delta, mesuré au moyen de la mesure isotherme à 210°C, module, mesuré d'après la norme DIN 53504, déformation permanente après compression (24 h/100°C à 25%), ne soient modifiées de manière désavantageuse, par rapport à une composition de caoutchouc qui contient une quantité correspondante d'huile de ricin en tant que plastifiant.

16. Procédé pour la fabrication d'une vessie pour la fabrication de pneumatiques, dans lequel une composition de caoutchouc qui contient un ou plusieurs polyorganosiloxanes modifiés, une ou plusieurs résines de réticulation pour la réticulation et le cas échéant d'autres additifs usuels est vulcanisée au moyen de la résine de réticulation, le polyorganosiloxane modifié et la composition de caoutchouc étant tels que définis dans l'une des revendications 1 à 14 précédentes.

17. Vessie pour fabrication de pneumatiques, qui comprend une composition de caoutchouc vulcanisable avec la résine de réticulation, ladite composition de caoutchouc comprenant un polyorganosiloxane modifié et ayant été vulcanisée au moyen de la résine de réticulation, le polyorganosiloxane modifié et la composition de caoutchouc étant tels que définis dans l'une des revendications 1 à 14 précédentes.
